# EUROPÄISCHE PATENTSCHRIFT

(11) **EP 1 785 215 B1**
(45) Veröffentlichungstag und Bekanntmachung des Hinweises auf die Patenterteilung: **21.01.2009**
(21) Anmeldenummer: 06023037.2
(22) Anmeldetag: 06.11.2006
(51) Int. Cl.: B23K 26/08, B23K 26/14

(54) **Remote-Laserschweißverfahren**
Method for remote laser welding
Procédé de soudage laser à distance

(30) Priorität: 15.11.2005 DE 102005054351
(43) Veröffentlichungstag der Anmeldung: 16.05.2007
(73) Patentinhaber: Bergmann, Uwe, 32139 Spenge (DE)
(72) Erfinder: Bergmann, Uwe, 32139 Spenge (DE)
(74) Vertreter: Wiebusch, Manfred

(56) Entgegenhaltungen:
- EP-A- 0 773 085
- EP-A- 1 652 615

## Beschreibung

Die Erfindung betrifft ein Remote-Laserschweißverfahren, bei dem zwei zu verschweißende Werkstücke lagerichtig zwischen Stempeln eingespannt werden, die an einer einer oberen und einer unteren Spannplatte angeordnet sind, und ein Laserstrahl mit Hilfe eines Ablenkspiegels nacheinander durch in einer der Spannplatten ausgebildete Öffnungen auf mehrere Schweißstellen gerichtet wird.

Der Vorteil eines Remote-Laserschweißverfahrens, wie es z. B. in EP 1 228 835 A beschrieben wird, besteht darin, daß der Laserstrahl mit Hilfe des Ablenkspiegels in rascher Folge auf eine Vielzahl von Schweißpunkten gerichtet werden kann, ohne daß zwischendurch die Einspannung der Werkstücke oder deren Lage verändert werden muß. Bei geeigneten, zumeist flächig ausgedehnten Werkstücken ermöglicht dies ein äußerst effizientes Arbeiten.

Ein Problem besteht jedoch darin, daß der Laserstrahl, zumeist ein CO₂-Laser, vom Ablenkspiegel bis zur Schweißstelle einen relativ weiten Weg zurücklegen muß, so daß Intensitätsverluste eintreten können. Insbesondere werden solche Intensitätsverluste durch das beim Schweißen entstehende Plasma verursacht. Die einfallende Laserstrahlung kann am Plasma reflektiert, gestreut oder absorbiert werden. Da dann weniger oder keine Wärmeabgabe mehr an das Werkstück erfolgt, heizt sich das Plasma weiter auf und wird beschleunigt, so daß sich eine Plasmawolke vom Werkstück ablöst und sich in Richtung des Laserstrahls bewegt, wodurch der Laserstrahl noch weiter geschwächt wird, bis schließlich der Bearbeitungsprozeß unterbrochen wird. Um dies zu vermeiden, muß entweder die Entstehung des Plasmas verhindert oder die entstehende Plasmawolke rasch genug entfernt werden.

Bekanntlich läßt sich die Entstehung des Plasmas durch Einsatz eines Schutzgases unterdrücken. Diese Lösung wäre jedoch bei einem Remote-Laserschweißverfahren sehr aufwendig und kostspielig, da eine Vielzahl von zumeist relativ weit auseinanderliegenden Schweißpunkten gleichzeitig begast werden müßte.

Im Prinzip ist es auch denkbar, die Plasmawolke mit Hilfe einer Luftströmung wegzublasen, die von druckluftgespeisten Luftklingen erzeugt wird. Dabei könnte man den Umstand ausnutzen, daß eine Luftströmung, die mit hinreichend hoher Strömungsgeschwindigkeit eine Oberfläche überstreicht, sich aufgrund des sogenannten Coanda-Effekts gleichsam von selbst an die Oberfläche ansaugt. Mit Hilfe der aus der Luftklinge austretenden Druckluft ließe sich daher ein relativ dünner Luftfilm erzeugen, der die Werkstückoberfläche mit hoher Geschwindigkeit überstreicht und die Plasmawolke aus den Bereich des Laserstrahls entfernt.

Aufgabe der Erfindung ist es, ein Remote-Laserschweißverfahren der eingangs genannten Art zu schaffen, das geringere Installations- und Betriebskosten erfordert.

Diese Aufgabe wird erfindungsgemäß dadurch gelöst, daß daß das beim Schweißen entstehenden Plasma mit Hilfe einer Luftströmung entfernt wird, die durch ein Gebläse erzeugt und durch einen Luftleitkanal, der durch eines der Werkstücke und die mit den Öffnungen versehene Spannplatte begrenzt wird, in der Weise hindurchgeleitet wird, daß die Strömung den gesamten Querschnitt des Luftleitkanals einnimmt.

Dabei macht man sich den Umstand zunutze, daß die Werkstückoberfläche und die ihr gegenüberliegende Spannplatte einander in einem geringen, durch die Stempel definierten Abstand gegenüberliegen und somit auf natürliche Weise einen Luftleitkanal bilden, der die Luftströmung kanalisieren kann. Allerdings muß die Spannplatte, die dem Werkstück zugewandt ist, auf dessen Oberfläche der Laserstrahl gerichtet wird, notwendig Öffnungen aufweisen, durch die der Laserstrahl hindurchtreten kann. Die durch die Spannplatte gebildete Begrenzung des Luftleitkanals ist somit lückenhaft. Es erweist sich jedoch, daß es dennoch möglich ist, eine Luftströmung zu erzeugen, die den Luftleitkanal auf der gesamten Werkstückoberfläche mit hinreichender Intensität durchströmt. Der Grund besteht darin, daß die Luftströmung zu einer Abnahme des statischen Druckes im Luftleitkanal führt, so daß durch die Öffnungen für den Laserstrahl keine Luft entweicht, sondern eher noch Luft angesaugt wird. Hierdurch ist es möglich, mit Hilfe eines relativ schwach ausgelegten Gebläses eine hinreichend starke Luftströmung zu erzeugen, die das entstehende Plasma wirksam entfernt.

Durch die Verwendung eines Gebläses anstelle einer Druckluftquelle werden nicht nur Installationskosten sondern auch Betriebskosten gespart, weil bei dem erfindungsgemäßen Verfahren der Luftverbrauch und damit auch die Energiekosten geringer sind als bei der Erzeugung eines Luftfilms mit Hilfe von Druckluft. Zugleich wird eine höhere Betriebssicherheit erreicht, da die Luftströmung den gesamten Querschnitt des Luftleitkanals ausfüllt und somit sehr stabil ist, so daß anders als bei einem dünnen Druckluftfilm der nur durch den Coanda-Effekt an der Werkstückoberfläche haftet, nicht die Gefahr besteht, daß der Strömungsfilm zusammenbricht und es dann doch zu einer Unterbrechung des Bearbeitungsprozesses kommt.

Gegenstand der Erfindung ist außerdem eine Spannvorrichtung zur Durchführung des oben beschriebenen Verfahrens. Vorteilhafte Ausgestaltungen und Weiterbildungen der Erfindung sind in den Unteransprüchen angegeben.

Die Strömung in dem Luftleitkanal kann wahlweise mit Hilfe eines Druckgebläses oder auch mit Hilfe eines Sauggebläses erzeugt werden. Bevorzugt ist jedoch die Verwendung eines Druckgebläses. Gegebenenfalls kann auch eine Kombination aus Druck- und Sauggebläsen verwendet werden.

Die Spannvorrichtung weist üblicherweise eine stationäre Spannplatte und eine relativ dazu bewegliche, beispielsweise anhebbare und absenkbare Spannplatte auf, die zum Abtransport der verschweißten Werkstücke und zur Zufuhr eines neuen Werkstückpaares angehoben wird. Das Gebläse, das ein relativ geringes Gewicht hat, kann dann vorzugsweise starr an der beweglichen Spannplatte angeordnet sein, so daß es bei angehobener Spannplatte nicht den Transport der Werkstücke behindert und sich andererseits bei geschlossener Spannvorrichtung automatisch in der korrekten Position befindet.

An den parallel zur Strömungsrichtung verlaufenden Längsseiten kann der Luftleitkanal durch Leitbleche abgeschlossen sein, die ebenfalls an einer der Spannplatten, vorzugsweise einer beweglichen Spannplatte, angebracht sein können.

Die Öffnungen für den Laserstrahl sind vorzugsweise an der Leeseite so abgefast oder abgerundet, daß die Luftströmung, wenn sie auf den Rand der Öffnung auftrifft, wieder in den Luftleitkanal geleitet wird und nicht in die Öffnung abgelenkt wird. Der gegenüberliegende, luvseitige Rand der Öffnung kann wahlweise zu einer Lippe geformt sein, die eine Art Düse bildet, die den Luftstrom parallel zur Werkstückoberfläche gerichtet hält.

Im folgenden wird ein Ausführungsbeispiel der Erfindung anhand der Zeichnung näher erläutert.

Es zeigen:
Figur 1 einen schematischen Schnitt durch eine Spannvorrichtung, die zur Durchführung des erfindungsgemäßen Remote-Laserschweißverfahrens ausgebildet ist; und
Figur 2 einen Schnitt durch die Spannvorrichtung in einer zur Schnittebene in Figur 1 senkrechten Schnittebene.

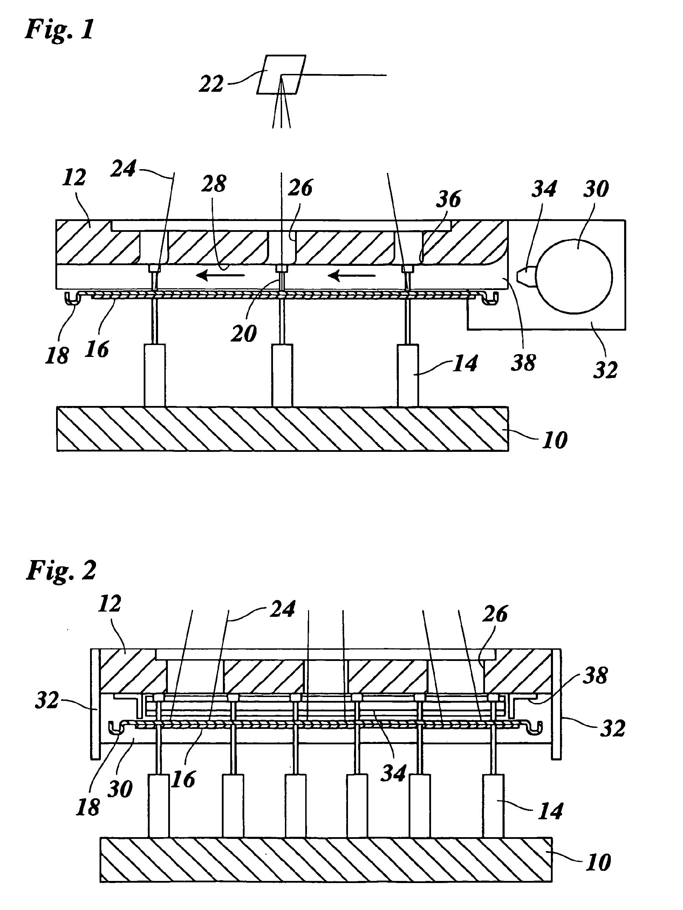

Die in Figur 1 gezeigte Spannvorrichtung weist eine untere Spannplatte 10 und eine obere Spannplatte 12 auf, die mit Hilfe eines nicht gezeigten Hubmechanismus in vertikaler Richtung relativ zur unteren Spannplatte 10 beweglich ist. Die untere Spannplatte 10 ist mit auf der Fläche verteilten Stempeln 14 bestückt, die zwei miteinander zu verschweißende Werkstücke 16, 18 (Bleche) abstützen. Das untere Werkstück 16 liegt unmittelbar auf den Stempeln 14 auf, und das obere Werkstück 18 liegt auf dem unteren Werkstück 16 auf und ist mit Hilfe einer nicht gezeigten Positioniereinrichtung lagerichtig in bezug auf das Werkstück 16 positioniert. Die obere Spannplatte 12 ist mit starren Stempeln 20 bestückt, die den unteren Stempeln 14 gegenüberliegen.

Figur 1 zeigt die Spannvorrichtung in geschlossenem Zustand. Die obere Spannplatte 12 ist auf die Werkstücke 16, 18 abgesenkt, so daß die Werkstücke zwischen den Stempeln 14 und 20 eingespannt werden. Die unteren Stempel 14 sind mit Druckfedern oder hydraulisch abgefedert, so daß sie etwas nachgeben können und dann elastisch gegen das Werkstück 16 vorgespannt sind. Auf diese Weise wird unabhängig von etwaigen Maßtoleranzen der Werkstücke eine gleichmäßig feste Einspannung an allen Einspannpunkten gewährleistet.

Die Stempel 14 und 20 sind so positioniert, daß sie jeweils in unmittelbarer Nähe eines Schweißpunktes oder einer Schweißnaht liegen, durch die die Werkstücke 16, 18 miteinander verschweißt werden sollen.

In Figur 1 ist oberhalb der oberen Spannplatte 12 schematisch ein Ablenkspiegel 22 gezeigt, mit dem ein Laserstrahl 24 nacheinander auf die vorgesehenen Schweißstellen gerichtet werden kann. Damit der Laserstrahl 24 die Oberfläche des Werkstücks 18 erreichen kann, weist die obere Spannplatte 12 in der Nähe jedes Einspannpunktes eine Öffnung 26 auf, durch die der Laserstrahl hindurchtreten kann.

Die obere Oberfläche des Werkstücks 18 und die Unterseite der oberen Spannplatte 12 begrenzen einen Luftleitkanal 28, in dem eine Luftströmung aufrechterhalten wird, wie in Figur 1 durch Pfeile symbolisiert wird. Zur Erzeugung der Luftströmung dient ein Gebläse 30, z. B. ein ein- oder mehrstufiges Zentrifugalgelbläse, das mit Hilfe von Konsolen 32 starr an einem Ende der Spannplatte 12 befestigt ist und Luft über eine Schlitzdüse 34 in den Luftleitkanal 28 abgibt. Die Länge der Schlitzdüse 34, in der Richtung senkrecht zur Zeichenebene, ist so gewählt, daß die Luftströmung sämtliche Schweißpunkte überstreicht. Gegebenenfalls können auch mehrere auf Stoß aneinander gesetzte Gebläse und Schlitzdüsen vorgesehen sein. Ein Beispiel für eine geeignete Anordnung aus Gebläse und Schlizdüse wird in GB 2 254 808 A beschrieben.

Die obere Spannplatte 12 ist an ihrer der Schlitzdüse 34 zugewandten Kante so verrundet, daß die Luftströmung ungehindert in den Luftleitkanal eintreten kann. Auch die Öffnungen 26 sind jeweils an der Leeseite so verrundet, daß die dort aufprallende Luft wieder in den Luftleitkanal 28 zurückgeleitet wird und nicht durch die Öffnungen 26 austritt. Im gezeigten Beispiel sind außerdem die luvseitigen Kanten der Öffnungen 26 zu Lippen 36 ausgeformt, die im Bereich der Öffnung 26 für eine parallel zur Oberfläche des Werkstücks 18 gerichtete Luftströmung sorgen.

An den Längsseiten wird der Luftleitkanal 28 durch Leitbleche 38 begrenzt, die an der oberen Spannplatte 12 befestigt sind und deren Profil in Figur 2 zu erkennen ist. Außerdem sieht man in Figur 2, daß die Stempel 14, 20 jeweils in unmittelbarer Nähe der Ränder der Öffnungen 26 liegen. Die Schlitzdüse 34 ist in Figur 2 in einer Stirnansicht zwischen den Leitblechen 38 zu sehen.

Die von der Schlitzdüse 34 erzeugte Luftströmung füllt im wesentlichen den gesamten Querschnitt des Luftleitkanals 28 aus und tritt mit im wesentlichen unverminderter Stärke am dem Gebläse 30 entgegengesetzten Ende aus dem Luftleitkanal aus. Auf diese Weise wird an sämtlichen Schweißstellen eine hinreichend starke Luftströmung erzeugt, die dafür sorgt, daß die beim Schweißen entstehenden Plasmawolken durch die Luftströmung mitgenommen und aus dem Bereich des Laserstrahls 24 entfernt werden. Insbesondere werden die Plasmawolken auch dann wirksam "weggeblasen", wenn sie sich infolge fortschreitender Aufheizung längs des Laserstrahls 24 ausbreiten.

Während im gezeigten Beispiel das Gebläse 30 als Druckgebläse ausgebildet ist, kann wahlweise auch ein Sauggebläse verwendet werden. Allerdings besteht dann eine gewisse Gefahr, daß durch die Öffnungen 26 "Falschluft" angesaugt wird, so daß die Intensität der Luftströmung am dem Gebläse entgegengesetzten Ende des Luftleitkanals 28 abnimmt. Gegebenenfalls kann auch eine Kombination aus Druckgebläse und Sauggebläse an entgegengesetzten Enden des Luftleitkanals 28 verwendet werden. Sofern in der Mitte der Spannvorrichtung, auf halber Länge des Luftleitkanals 28, keine Schweißstellen erforderlich sind, können gegebenenfalls auch Sauggebläse an beiden Enden des Luftleitkanals 28 angeordnet sein. Die Luft würde dann durch eine oder mehrere in der Mitte der Spannplatte 12 gelegene Öffnungen 26 in den Luftleitkanal 28 eingesaugt. Erforderlichenfalls können in dieser Weise Sauggebläse auch an allen vier Rändern der Spannplatte 12 vorgesehen sein.

## Patentansprüche

1. Remote-Laserschweißverfahren **dadurch gekennzeichnet, daß** bei dem zwei zu verschweißende Werkstücke (16, 18) lagerichtig zwischen Stempeln (14, 20) eingespannt werden, die an einer oberen (12) und einer unteren Spannplatte (10) angeordnet sind, und ein Laserstrahl (24) mit Hilfe eines Ablenkspiegels (22) nacheinander durch in einer (12) der Spannplatten ausgebildete Öffnungen (26) auf mehrere Schweißstelle gerichtet wird, und das beim Schweißen entstehenden Plasma mit Hilfe einer Luftströmung entfernt wird, die durch ein Gebläse (30) erzeugt und durch einen Luftleitkanal (28), der durch eines (18) der Werkstücke und die mit den Öffnungen (26) versehene Spannplatte (12) begrenzt wird, in der Weise hindurchgeleitet wird, daß die Strömung den gesamten Querschnitt des Luftleitkanals (28) einnimmt.

2. Spannvorrichtung zur Durchführung des Remote-Laserschweißverfahrens nach Anspruch 1, **dadurch gekennzeichnet, daß** längs mindestens eines Randes der Spannplatten (10. 12) ein Gebläse (30) angeordnet ist, das Luft in den zwischen dieser Spannplatte (12) und dem Werkstück (18) gebildeten Luftleitkanal (28) einbläst.

3. Spannvorrichtung nach Anspruch 2, **dadurch gekennzeichnet, daß** das Gebläse (30) starr an der mit den Öffnungen (26) versehenen Spannplatte (12) befestigt ist.

4. Spannvorrichtung nach Anspruch 2 oder 3, **dadurch gekennzeichnet, daß** der Luftleitkanal (28) an den parallel zur Strömungsrichtung verlaufenden Rändern durch Leitbleche (38) begrenzt ist.

5. Spannvorrichtung nach Anspruch 4, **dadurch gekennzeichnet, daß** die Leitbleche (38) an der Spannplatte (12) befestigt sind, die die Öffnungen (26) aufweist.

6. Spannvorrichtung nach einem der Ansprüche 2 bis 5, **dadurch gekennzeichnet, daß** die Öffnungen (26) der Spannplatte (12) jeweils an ihrem leeseitigen Rand verrundet oder abgefast sind.

7. Spannvorrichtung nach einem der Ansprüche 2 bis 6, **dadurch gekennzeichnet, daß** die Öffnungen (26) jeweils an ihrem luvseitigen Rand zu einer Lippe (36) ausgeformt sind.

8. Spannvorrichtung nach einem der Ansprüche 2 bis 7, **dadurch gekennzeichnet, daß** das Gebläse (30) ein Druckgebläse ist.

9. Spannvorrichtung nach einem der Ansprüche 2 bis 8, **dadurch gekennzeichnet, daß** die mit den Öffnungen (26) versehene Spannplatte (12) relativ zu der anderen Spannplatte (10) in der zur Ebene dieser Spannplatte (10) senkrechten Richtung beweglich ist.

## Claims

1. Remote laser welding method, **characterised in that** two workpieces (16, 18) which are to be welded are clamped in a positionally correct manner between support members (14, 20) which are arranged on an upper clamping plate (12) and a lower clamping plate (10), and a laser beam (24) is directed onto a plurality of welding locations by means of a redirecting mirror (22) successively through openings (26) which are formed in one (12) of the clamping plates, and the plasma which is produced during the welding is removed by means of an air flow which is produced by a fan (30) and is guided through an air guiding channel (28) which is delimited by one (18) of the workpieces and the clamping plate (12) which is provided with the openings (26) in such a manner that the flow takes up the entire cross-section of the air guiding channel (28).

2. Clamping device for carrying out the remote laser welding method according to claim 1, **characterised in that** a fan (30) which blows air into the air guiding channel (28) which is formed between that clamping plate (12) and the workpiece (18) is arranged along at least one edge of the clamping plates (10, 12).

3. Clamping device according to claim 2, **characterised in that** the fan (30) is rigidly secured to the clamping plate (12) which is provided with the openings (26).

4. Clamping device according to claim 2 or claim 3, **characterised in that** the air guiding channel (28) is delimited at the edges which extend parallel with the flow direction by guiding plates (38).

5. Clamping device according to claim 4, **characterised in that** the guiding plates (38) are secured to the clamping plate (12) which has the openings (26).

6. Clamping device according to any one of claims 2 to 5, **characterised in that** the openings (26) of the clamping plate (12) are each rounded or chamfered at the leeward-side edge thereof.

7. Clamping device according to any one of claims 2 to 6, **characterised in that** the openings (26) are each shaped to form a lip (36) at the windward-side edge thereof.

8. Clamping device according to any one of claims 2 to 7, **characterised in that** the fan (30) is a forced draught fan.

9. Clamping device according to any one of claims 2 to 8, **characterised in that** the clamping plate (12) which is provided with the openings (26) can be moved relative to the other clamping plate (10) in the direction perpendicular relative to the plane of that clamping plate (10).

## Revendications

1. Procédé de soudure à distance par laser, **caractérisé en ce que** deux pièces usinées à souder (16, 18) sont maintenues serrée en position entre des mandrins (14, 20), qui sont agencés sur une plaque de serrage supérieure (12) et une plaque de serrage inférieure (10), et un rayon laser (24) est dirigé successivement sur plusieurs points de soudure à travers des ouvertures formées dans une (12) des plaques de serrage grâce à un miroir de déviation (22), et le plasma produit lors du soudage est éliminé grâce à un courant d'air, qui est produit par une soufflante (30) et est canalise grâce à une conduite d'air (28), qui est limitée par une (18) des pièce usinées et par la plaque de serrage (12) munie des ouvertures (26), de sorte que le courant occupe la totalité de la section de la conduite d'air (28).

2. Dispositif de serrage pour la mise en oeuvre du procédé de soudure à distance par laser selon la revendication 1, **caractérisé en ce qu'**une soufflante (30) est agencée le long d'au moins un bord des plaques de serrage (10, 12), et l'air est soufflé dans la conduite d'air (28) formée entre cette plaque de serrage et la pièce usinée (18).

3. Dispositif de serrage selon la revendication 2, **caractérisé en ce que** la soufflante (30) est fixé de manière rigide sur la plaque de serrage (12) munie des ouvertures (26).

4. Dispositif de serrage selon la revendication 2 ou 3, **caractérisé en ce que** la conduite d'air (28) est limitée par des déflecteurs (38) sur les bords s'étendant parallèlement au sens du courant.

5. Dispositif de serrage selon la revendication 4, **caractérisé en ce que** les déflecteurs (38) sont fixés sur la plaque de serrage (12) qui présente les ouvertures (26).

6. Dispositif de serrage selon l'une quelconque des revendications 2 à 5, **caractérisé en ce que** les ouvertures (26) de la plaque de serrage (12) sont arrondies ou biseautées respectivement au niveau de leur bord protégé du courant d'air.

7. Dispositif de serrage selon l'une quelconque des revendications 2 à 6, **caractérisé en ce que** les ouvertures (26) sont déformés respectivement au niveau de leur bord exposé au courant d'air pour former une lèvre (36).

8. Dispositif de serrage selon l'une quelconque des revendications 2 à 7, **caractérisé en ce que** la soufflante (30) est un ventilateur soufflant.

9. Dispositif de serrage selon l'une quelconque des revendications 2 à 8, **caractérisé en ce que** la plaque de serrage (12) munie des ouvertures (26) est mobile par rapport à l'autre plaque de serrage (10) dans la direction perpendiculaire au plan de cette plaque de serrage (10).
